# EUROPEAN PATENT SPECIFICATION

(11) **EP 2 602 625 B1**
(45) Date of publication and mention of the grant of the patent: **26.02.2020**
(21) Application number: 11192096.3
(22) Date of filing: 06.12.2011
(51) Int. Cl.: G01N 35/00

(54) **Method, device and computer program for monitoring diagnostic test processes**
Verfahren, Vorrichtung und Computerprogramm zur Überwachung von Diagnoseprüfverfahren
Procédé, dispositif et programme informatique de surveillance des procédés de test de diagnostic

(43) Date of publication of application: 12.06.2013
(73) Proprietor: Sysmex Corporation, Kobe-shi, Hyogo 651-0073 (JP)
(72) Inventor: Burbulla, Juergen, 22848 Norderstedt (DE); Altmeppen-Toebben, Johannes, 22848 Norderstedt (DE); Schmidt, Carola, 22848 Norderstedt (DE)
(74) Representative: Hoffmann Eitle

(56) References cited:
- US-A1- 2004 096 366
- US-A1- 2004 267 575
- US-A1- 2007 038 496
- US-A1- 2010 111 767
- US-A1- 2010 250 174
- US-A1- 2011 245 061

## Description

### [Technical field]

The present invention relates to methods and devices for monitoring diagnostic test processes. The invention also relates to computer programs configured for that purpose. The invention may notably be used in clinical laboratories.

### [Background]

Modern clinical laboratories, whether located in a hospital or outside a hospital, are often equipped with analyzers capable of analyzing hundreds or thousands of clinical specimens or samples, such as for instance blood or urine samples, during a single day. Such analyzers may for instance include blood cell counting apparatuses. In order to analyze individual samples and also depending on the particular clinical test to be performed, complex processing may need to be performed. Timely and successfully analyzing the samples is critical to provide the input that the physicians need to understand patients' conditions so that an appropriate treatment can be rapidly provided.

European patent application EP 2037282 A2 relates to tools for evaluation of the performance of clinical diagnostic analyzers by executing a portable simulation program utilizing actual data from a site of interest.

It is desirable to provide methods and devices to improve the efficiency and reliability of diagnostic test processing performed for instance in clinical laboratories, while taking into account the need for keeping the maintenance and operational costs down.

US 2004/0096366 A1, relates to a control device for an automatic liquid handling system. The liquid handling system is provided with a self-diagnosing function that is capable of determining whether scheduled processes are executable or not during the time set before execution of the processes and informing an operator of the results of the determination. The self-determination function executes an operation time simulation to obtain the total time required for executing all the previously set operations, by taking into account movement and dispense times for the robot.

US 2004/0267575 relates to monitoring medical examination and/or treatment activities. Such a monitoring is, however, performed with respect to patients, not with respect to samples.

US 2010/250174 A1 teaches a sample inspection system and operation method for a management server thereof, whereas the server includes sample processing information generated on the basis of inspection request data, facility data, a simulation execution portion and a window generation portion for generating a monitor window.

### [Summary]

To meet or at least partially meet the above-mentioned goals, such methods and devices are defined in the independent claims. Advantageous embodiments are defined in the dependent claims.

In one embodiment, a method is provided for monitoring a diagnostic test process of samples. The diagnostic test process includes at least two sub-processes. The method includes a simulating procedure performed by a simulation module, a receiving procedure performed by a receiving module, and a displaying procedure performed by a displaying module. The simulating procedure includes simulating, at least based on data representing characteristics of each of the at least two sub-processes, a progress, here referred to as simulated progress, of the diagnostic test process for each of the at least two sub-processes. The receiving procedure includes receiving time information data representing the actual progress of the diagnostic test process for each of the at least two sub-processes. Further, the displaying procedure includes displaying, for each of the at least two sub-processes, information derived from at least the simulated progress of the diagnostic test process and the received time information data representing the actual progress of the diagnostic test process, wherein the derived information is displayed in a manner enabling a comparison of the simulated progress and the actual progress for each of the at least two sub-processes.

The method enables a timely and cost-effective identification and detection of sources of jams (i.e., blockage or congestion of samples) and/or failures in a complex diagnostic test process. Indeed, the displaying procedure includes displaying information in a manner enabling a user to visually compare the simulated progress and the actual progress individually for each of the sub-processes. The comparison of simulated and actual progress on a per sub-process basis, rather than only for the whole process, enables to identify an individual sub-process which is unexpectedly affecting the progress of the whole diagnostic test process. Consequently, prompt corrective actions (such as for instance changing the operational parameters of an analyzer, providing more or different resources for implementing, realizing or supervising a particular sub-process, or the like) may be undertaken in the laboratory so that the turnaround time of samples and the used production goods and resources may be minimized.

In this context, a diagnostic test process is a set of sub-processes for testing, analyzing or examining samples, such as for instance biological samples taken from patients. In other words, a diagnostic test process is a set of procedures or events used to test, analyze or examine samples and to produce information, i.e. data, about the characteristics, nature, properties or features of the samples, wherein the produced information, i.e. the data, may be used in the context of assisting medical personnel in making a diagnosis, in confirming a diagnosis, in treating a patient, in the prevention of disease, or the like. Sub-processes may each be performed by different devices and/or analyzers in the laboratory or by different parts of such devices and/or analyzers. Some sub-processes may also be performed manually or by a combination of manual and/or automatic operations. A single segment of a chain of analyzers may also be configured to perform more than one sub-process, either in parallel or in series.

Simulating, in the simulating procedure, involves determining the expected progress of each of the at least two sub-processes of the diagnostic test process based on characteristics of the sub-processes, wherein a characteristic of a sub-process may notably include the expected duration for processing one sample or a number of samples.

In the context of the receiving procedure, data representing the actual progress may for instance include information about the completion or non-completion of the processing of a sample or a number of samples for each sub-process. The data representing the actual progress may notably be received through a message or packet, such as for instance an Internet Protocol (IP) packet, sent over a communication network from an analyzer to a central point of processing.

Displaying, in the displaying procedure, includes visually representing, for instance on a computer display or any type of visual support (television, mobile phone, smartphone, laptop, printer, etc.), the simulated progress and the real progress of the individual sub-processes, or information derived from the simulated progress and the real progress, in a manner enabling a user to compare the simulated progress and the real progress for the individual sub-processes separately. Thus, a user may judge whether, for a sub-process, the real progress unexpectedly diverges from the simulated progress. The user may also rapidly identify a sub-process disrupting the expected progress of the whole diagnostic test process, to promptly and appropriately react to the disruption.

In one embodiment, an input to the simulation procedure is based on at least one of: (i) a sequence of execution of the sub-processes in the diagnostic test process, (ii) an analyzer configuration, (iii) order entry statistics, and (iv) measurement statistics. Therefore, in this embodiment, the simulation procedure may be adapted and changed at any time to closely fit an actual situation regarding notably the expected number of samples, the steps required for analyzing the samples (in reaction for instance to some new regulatory requirement that a new step has to be performed in a particular sub-process), etc.

In other words, the simulation procedure may be adapted to the details of specific sub-processes that may include both manual and automated measures, and to the specific configuration of analyzing instruments of the clinical laboratory. This embodiment further enables to adapt the simulation procedure based on statistical data that may flexibly be provided for a daily, monthly, and/or an annual time scale (or any other duration).

In one embodiment, the simulating procedure is such that simulating is further based on at least one of: (a) data about the number of samples to be actually tested, (b) data about the time at which the samples to be tested are expected to arrive (at the laboratory or, more generally, at the location where the samples are to be tested), and (c) data representing the progress of a previous execution of the diagnostic test process, for each of the at least two sub-processes. This embodiment enables the simulation procedure to provide improved estimates as to the number of samples that are expected to be tested within a specific amount of time. Moreover, this embodiment enables to provide a prediction as to an expected time at which the testing of a total amount of samples should have been completed or should be completed. In the case of significant differences between the simulated amount of tested samples and the actual amount of test samples, the supervising personnel at the clinical laboratory may undertake to add additional resources in order to perform the sub-processes.

In one embodiment, each of the sub-processes of the diagnostic test process may be performed on a distinct device or on a distinct segment of a device. The at least two sub-processes may include at least two of: labelling sample containers, sorting sample containers, and analyzing samples. Such distinct devices may for example be a labeller, an analyzer, and/or a sorter. This embodiment thus enables to monitor a plurality of sub-processes that may be performed on test units which may be distributed throughout the clinical laboratory. Therefore, the method enables a central and efficient monitoring of a distributed and complex network of diagnostic test units, without the need for individual in situ monitoring of each device or segment thereof. In another embodiment, more than one sub-process may be performed on the same device or on the same segment of a device.

In one embodiment, the displaying procedure further includes concurrently displaying the simulated progress of the diagnostic test process and the received data representing the actual progress of the diagnostic test process for each of the at least two sub-processes.

This embodiment further contributes to a timely and cost-effective identification and detection of sources of jams, delays and/or failures in a complex diagnostic test workflow, since a user may readily identify the one specific sub-process within the overall diagnostic test process that, for instance, is the bottleneck.

In one embodiment, the method further includes comparing, for a sub-process of the diagnostic test process, a difference between the simulated progress and the actual progress. Further, the method of this embodiment includes issuing an alert when the difference between the simulated progress and the actual progress exceeds a predetermined threshold. Therefore, this embodiment enables an automated alerting system, such that a bottleneck (or other deficiencies) in one of the sub-processes is automatically detected. This embodiment provides the advantage that a user does not have to perform the time-consuming task to go through each individual sub-process in order to look for the cause of the delay. Thus, the source of jams and/or failures in a complex diagnostic test workflow may be faster identified. Thus, additional resources for the automatically identified sub-process may be provided more rapidly, or corrective actions may be promptly made to address a deficiency or failure in the identified sub-process.

In one embodiment, a device is provided for monitoring a diagnostic test process for samples that includes at least two sub-processes. The device includes, a simulation module, a receiving module and a displaying module, which are respectively adapted to carry out the simulation procedure, the receiving procedure and the displaying procedure of the method according to any one of the above-described embodiments.

In one embodiment, a computer program includes computer-readable instructions configured, when executed on a computer, to cause the computer to carry out a method according to any one of the above-described embodiments.

### [Brief description of the drawings]

Embodiments of the present invention shall now be described, in conjunction with the appended figures, in which:
Fig. 1 schematically illustrates an exemplary diagnostic test process including a plurality of sub-processes, to illustrate the context in which some embodiments of the invention may be put into practice.
Fig. 2 shows a flow diagram for a method for monitoring a diagnostic test process, in one embodiment of the invention.
Fig. 3 schematically illustrates a configuration of a device for performing the method for monitoring a diagnostic test process in the environment of a clinical laboratory, in one embodiment of the invention.
Fig. 3a schematically illustrates an exemplary processing device that may be used in some embodiments of the invention.
Fig. 4 shows a screenshot for the definition of a specific workflow, in one embodiment of the invention.
Fig. 5 shows a screenshot for the specification and management of the analyzer and device configuration, in one embodiment of the invention.
Fig. 6 shows a screenshot with an example of an order entry profile for a specific day, in one embodiment of the present invention.
Fig. 7 shows a screenshot with an example of a daily measurement statistics, in one embodiment of the invention.
Fig. 8 shows a screenshot with an example representing a simulated progress for an analytic sub-process, in one embodiment of the invention.
Fig. 9 shows a screenshot with an example representing an actual progress for an analytic sub-process, in one embodiment of the invention.
Fig. 10 shows a screenshot with an example of a displaying procedure representing an actual progress of an overall diagnostic test process concurrently with a simulated progress of the overall diagnostic test process, in one embodiment of the invention.
Fig. 11 shows a screenshot with an example of a displaying procedure representing an actual progress of a labelling sub-process concurrently with a simulated progress of the labelling sub-process, in one embodiment of the invention.
Fig. 12 shows a screenshot with an example of a displaying procedure representing an actual progress of a sorting sub-process concurrently with a simulated progress of the sorting sub-process, in one embodiment of the invention.

### [Detailed description]

The invention shall now be described in conjunction with specific embodiments. These specific embodiments serve to provide the skilled person with a better understanding, but are not intended to in any way restrict the scope of the invention, which is defined by the appended claims.

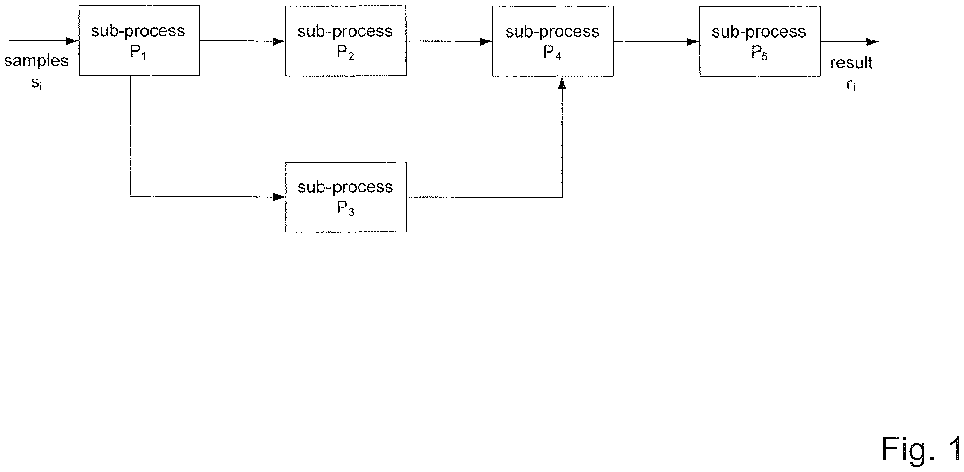

To understand the context in which some embodiments of the invention may be put into practice, Fig. 1 shows an exemplary diagnostic test process or workflow, wherein an overall diagnostic test of one or a plurality of samples *sᵢ* includes sub-processes *pⱼ*, wherein the number of sub-processes in Fig. 1 is 5 (five). Here, as a result of sub-process p₁, sub-process p₃ branches off, which may be performed in parallel to sub-process p₂ and also provides an input to sub-process p₄ which, also based on the input from sub-process p₂, provides a further input to sub-process p₅ that finally yields a clinical test result(s) *rᵢ* for the sample(s) *sᵢ*.

Diagnostic test processes or workflows in modern clinical laboratories may, however, include many more individual sub-processes and also a more complicated combination of serial and parallel sub-processes as that shown in Fig. 1. The number of sub-processes illustrated on Fig. 1 is only exemplary. A diagnostic test process may also comprise more than five sub-processes or fewer than five sub-processes. Clinical laboratories may also be required to analyze a certain amount of diagnostic/clinical tests during a single day, for example due to clinical reasons, emergency reasons, and/or due to economic reasons. Jams and/or production delays during the diagnostic test process(es) may thus be problematic for reaching the required number of tests per day. Moreover, the source of jams and/or production delays in manual and/or automated sub-processes of the diagnostic test process may be difficult to identify within such a complex workflow. In addition, the identification of the source(s) of such jams may require a significant amount of time and energy and may thus delay an appropriate modification of the overall diagnostic test process or workflow by the personnel supervising of the clinical laboratory and/or the provision of additional resources for the workflow.

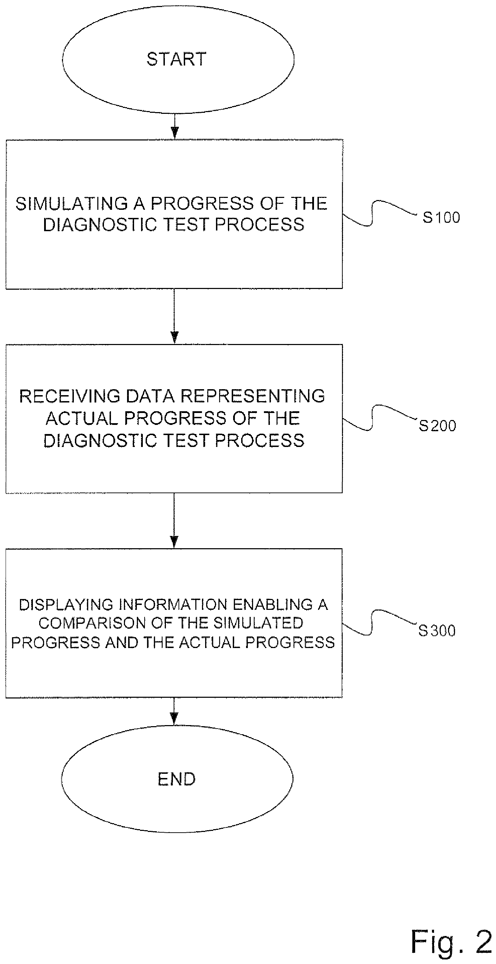

Fig. 2 shows a flow diagram for a method for monitoring a diagnostic test process in one embodiment of the invention, wherein the diagnostic test process includes at least two sub-processes *pⱼ*.

In particular, the method for monitoring a diagnostic test process includes a simulating procedure S100, wherein a progress of the diagnostic test process is simulated. The simulation is based on data representing characteristics of each of the at least two sub-processes.

As shown on Fig. 2, the method for monitoring a diagnostic test process further includes a receiving procedure S200, wherein data are received representing an actual progress of the diagnostic test process for each of the at least two sub-processes.

As shown on Fig. 2, the method for monitoring a diagnostic test process in this embodiment further includes a displaying procedure S300, wherein, for each of the at least two sub-processes, information derived from at least the simulated progress of the diagnostic test process and the received data representing the actual progress of the diagnostic test process is displayed. The information derived from at least the simulated progress and the received data representing the actual progress is displayed in such a manner that a comparison of the simulated progress and the actual progress for each of the at least two sub-processes is enabled.

The data representing characteristics of the plurality of sub-processes and thus defining the overall workflow are based on a plurality of specific activities to be performed in the clinical laboratory to achieve a test result. Each sub-process may thus refer to an activity type, such as a manual and an automated activity, an activity order, such as a sequential activity and a parallel activity, the specific configuration of an analyzer unit that is used for the activity, and/or the duration for the execution of a specific number of samples. Moreover, a sub-process may refer to the percentage of all samples that are to be handled by an activity, the number of employees assigned to an activity, and/or the batch size in order to start an activity.

The order of the sub-processes in the diagnostic test process, i.e. the sequence of execution and thus the definition of a detailed workflow, may be defined on an individual basis. Therefore, it is possible to pre-define different workloads and to thus select a workflow to be used for a simulation. Such a selection may be based on the workload and/or the needed resources. In addition, the selection may be based on a specific time interval, such as a day, a week, a month or any other duration. For example, different production workflows and/or used resources may be selected for a weekend, a day shift, and/or a night shift, etc.

Although Fig. 2 schematically illustrates that procedures S100, S200, S300 are performed sequentially, with the steps being performed in the order S100, then S200, then S300, this need not be the case. The simulating procedure S100 and the receiving procedure S200 may also be performed in parallel. Likewise, the displaying procedure S300 may be performed in parallel to the continued performance of the simulating procedure S100 and the receiving procedure S200, to the extent that the outputs of the simulating procedure S100 and of the receiving procedure S200 are used by the displaying procedure S300.

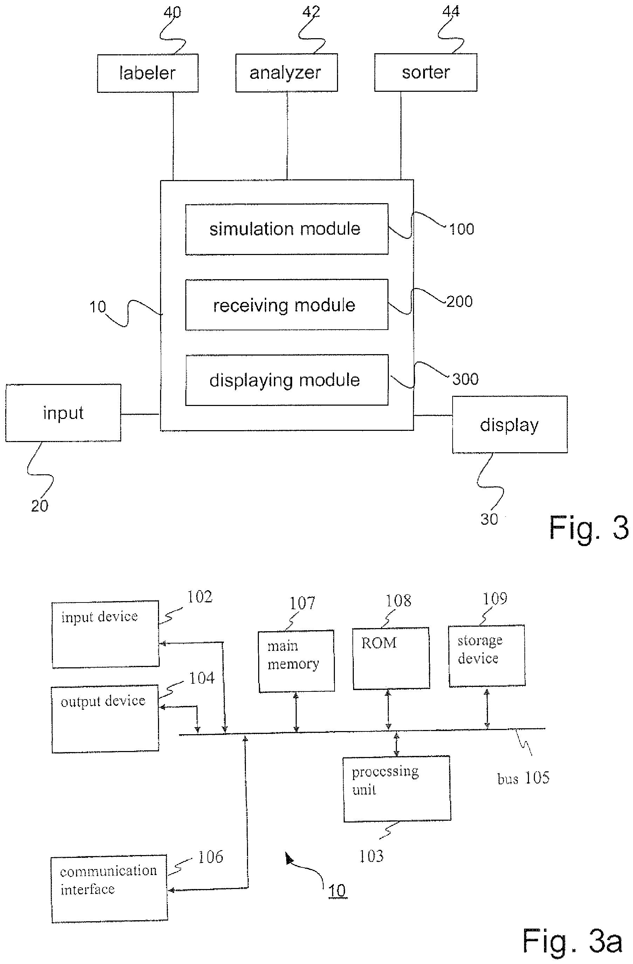

The method for monitoring the diagnostic test process may, in one embodiment, be implemented in a processing device 10 as schematically illustrated in Fig. 3.

As illustrated in Fig. 3, the processing device 10, which may be a computer or a set of computers, includes a simulation module 100 that is adapted to perform the above-described simulation procedure S100 based on input data received from the input device 20, a receiving module 200 that is adapted to perform the above-described receiving procedure S200, and a displaying module 300 that is adapted to perform the above-described displaying procedure S300 for displaying the simulated progress and the actual progress of a diagnostic test process on a display 30. Moreover, the receiving module 200 may receive data from a labeller 40, an analyzer 42 such as a hematology analyzer, a urine analyzer, and a coagulation analyzer, and/or a sorter 44 that are examples of units for performing individual sub-processes (or sets of sub-processes) and may transmit, through a data communication network (not illustrated), respective information as to the respective actual progress of the sub-processes of the diagnostic test process. In addition, the receiving module 200 may receive data from one or a plurality of bar code readers (not shown). The displaying module 300 may include preparing and formatting information for display on display 30. The sub-processes may each be performed on a distinct device or segment of a device 40, 42, 44. Alternatively, some sub-processes may be performed on the same device 40, 42, 44.

A processing device 10 which may be used in embodiments of the invention will now be briefly described with reference to Fig. 3a. According to Fig. 3a, processing device 10 may include a bus 105, a processing unit 103, a main memory 107, a ROM 108, a storage device 109, an input device 102 (which may be in communication with input device 20 or which may integrate input device 20), an output device 104 (which may be in communication with display device 30 or which may integrate display device 30), and a communication interface 106. The bus 105 may include a path that permits communication among the components of processing device 10.

The processing unit 103 may include a processor, a microprocessor, or processing logic that may interpret and execute instructions. The main memory 107 may include a RAM or another type of dynamic storage device that may store information and instructions for execution by the processing unit 103. The ROM 108 may include a ROM device or another type of static storage device that may store static information and instructions for use by the processing unit 103. The storage device 109 may include a magnetic and/or optical recording medium and its corresponding drive.

The input device 102 (as explained above, may be in communication with input device 20 or which may integrate input device 20) may include a mechanism that permits an operator, or more generally a user, to input information to processing device 10, such as a keypad, a keyboard, a mouse, a pen, voice recognition and/or biometric mechanisms, etc. The output device 104 (which, as explained above, may be in communication with display device 30 or which may integrate display device 30) may include a mechanism that outputs information to the operator, including a display, a printer, a speaker, etc. The communication interface 106 may include any transceiver-like mechanism that enables processing device 10 to communicate with other devices and/or systems. For example, the communication interface 106 may include mechanisms for communicating with another device or system via a network, such as a data communication network.

Processing device 10 may perform certain operations or processes described herein. Processing device 10 may perform these operations in response to the processing unit 103 executing software instructions contained in a computer-readable medium, such as the main memory 107, the ROM 108, and/or the storage device 109. A computer-readable medium may be defined as a physical or a logical memory device. For example, a logical memory device may include memory space within a single physical memory device or distributed across multiple physical memory devices. Each of the main memory 107, the ROM 108 and the storage device 109 may include computer-readable media. The magnetic and/or optical recording media (e.g., readable CDs or DVDs) of storage device may also include computer-readable media. The software instructions may be read into the main memory from another computer-readable medium, such as the storage device, or from another device via a communication interface.

The software instructions contained in the main memory 107 may cause the processing unit 103 to perform operations or processes described herein, such as those of each of the simulating module 100, the receiving module 200 and the displaying module 300. Alternatively, hardwired circuitry may be used in place of or in combination with software instructions to implement processes and/or operations described herein. Thus, implementations described herein are not limited to any specific combination of hardware and software.

In one embodiment, the input to the simulation procedure S100 is based on at least one of: (i) a workflow definition, (ii) an analyzer configuration, (iii) order entry statistics, and (iv) measurement statistics, which will now be explained in more detail. The explanations are provided with reference to exemplary user interfaces that may be used to input data for the simulation procedure S100. These user interfaces may be adapted depending on the needs and requirements of the personnel in charge of inputting the data for the simulation procedure S100.

### A) Workflow definition

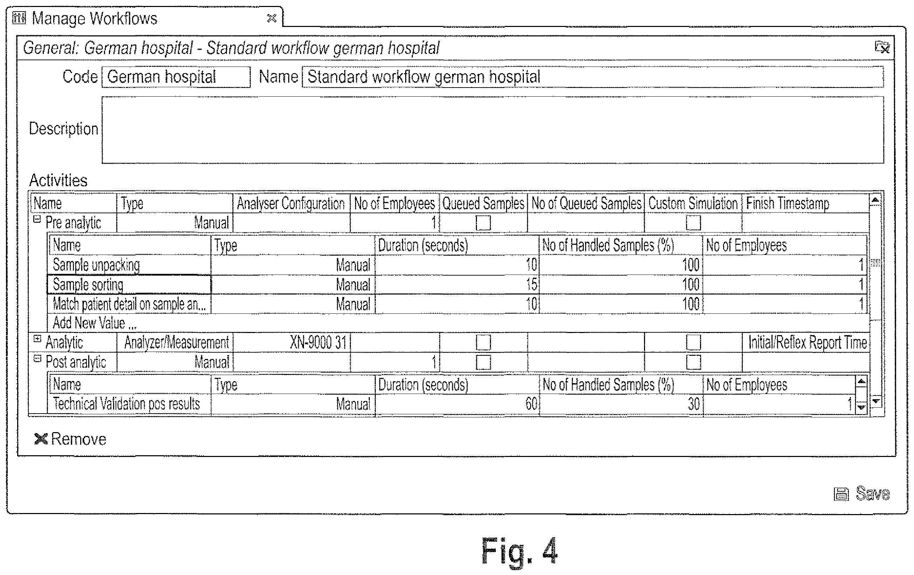

Fig. 4 shows an exemplary screenshot for the definition and management of a specific workflow according to one embodiment, for example here for standard German hospital laboratories. In particular, Fig. 4 shows the definition of pre-analytic, analytic, and post-analytic sub-processes. The recognition by the inventors of the advantages of construing, representing and defining the diagnostic test process as a plurality of sub-processes, in the context of and for the purpose of monitoring the technical diagnostic test process, forms one part, amongst others, of the inventive contribution.

According to Fig. 4, the pre-analytic sub-processes may include, for example, sample unpacking, sample sorting, and/or the matching of patient details. More particularly, sample unpacking/labelling is defined according to Fig. 4 to be a manual activity which needs 10 seconds for each sample, and where one employee is assigned to perform the activity. 100 per cent (%) of the samples are expected to be processed in the sample unpacking/labelling activity (sub-process). In addition, sample sorting is also a manual activity which needs 15 seconds for each sample, and one employee is assigned. 100 per cent (%) of the samples are expected to be processed in the sample sorting activity (sub-process). Further, the matching of patient details is defined to be a manual activity to check the information on a sample with the information on an order card for this sample. This activity is scheduled to require 10 seconds for each sample and one employee is assigned. 100 per cent (%) of the samples are expected to be processed in the activity (sub-process) of matching of patient details. As further shown in Fig. 4 (by the area labelled "Add New Value ..."), new sub-processes may be added according to changes in the workflow or according to a definition of a new workflow.

Further, according to Fig. 4, the analytic sub-processes may include automated activities that are performed by an analyzer and/or device identified by the exemplary identifier "XN-9000 31". The analytic sub-processes may include several sub-processes performed by the analyzer or different segments thereof.

These analytic sub-processes are not shown on Fig. 4, but may be seen by a user interacting with the depicted user interface by clicking on the sign "+" next to the label "Analytic". The post-analytic sub-processes may be related to validation of results, which is defined to be a manual activity which needs 60 seconds for each sample. According to the example shown in Fig. 4, only 30 per cent (%) of all samples are expected to be processed in this activity and one employee is assigned to this activity.

### B) Analyzer configuration

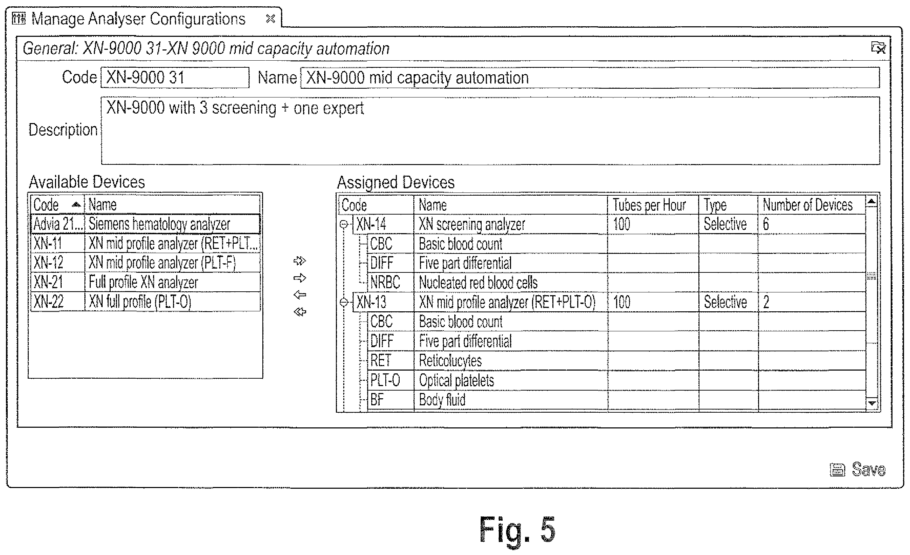

Fig. 5 shows an exemplary screenshot for the specification and management of the analyzer and device configuration according to one embodiment.

In particular, Fig. 5 shows details of an exemplary analyzer configuration "XN-9000 31" which, according to Fig. 4, refers to an analytic sub-process that includes an automated activity. Such predefined analyzer configurations that define the used analyzer and other devices are necessary in order to simulate the production workflow, i.e. the diagnostic test process.

In particular, Fig. 5 indicates that a plurality of devices may be available for a specific configuration of an analyser and thus a sub-process. For example, a Siemens haematology analyzer, XN mid profile analyzer, a full profile XN analyzer, and an XN full profile device may be available and thus selected for the analyzer configuration "XN-9000 31".

A user may select any of the available devices for the analyzer configuration and thus the definition of a sub-process in the simulating procedure S100. According to Fig. 5, for example, an XN screening analyzer and an XN mid profile analyzer (RET + PLT-O) are selected and are thus assigned devices for the analyzer configuration "XN-9000 31" that perform one or a plurality of sub-processes in the workflow of the diagnostic test process. More particularly, a user may specify in the simulation procedure a number of tubes per hour, the type of the device, and the number of devices for performing analytic tests, such as a basic blood count, nucleated red blood cells, reticolucytes, optical platelets, and body fluid. In the example of Fig. 5 for the sub-process or set of sub-processes "XN-9000 31", six XN-14 devices and two XN-13 devices are assigned for the analysis of 100 tubes per hour. The above configuration of the sub-process or set of sub-processes "XN-9000 31" may be assigned to the definition of a workflow, i.e. a plurality of sub-processes, for a specific production day.

### C) Order entry statistics

Further, for the simulation procedure S100 and also for the displaying procedure S300, i.e. for the comparison between the simulated progress and the actual progress of the diagnostic test process, the time sequence and the number of samples arriving in the lab may be further input parameters for the simulation procedure S100.

In one embodiment, the simulation procedure S100 is based on order entry profiles (i.e. an order entry statistics) from the past. Further, real production data of a day may be used to recalculate existing order entry statistics.

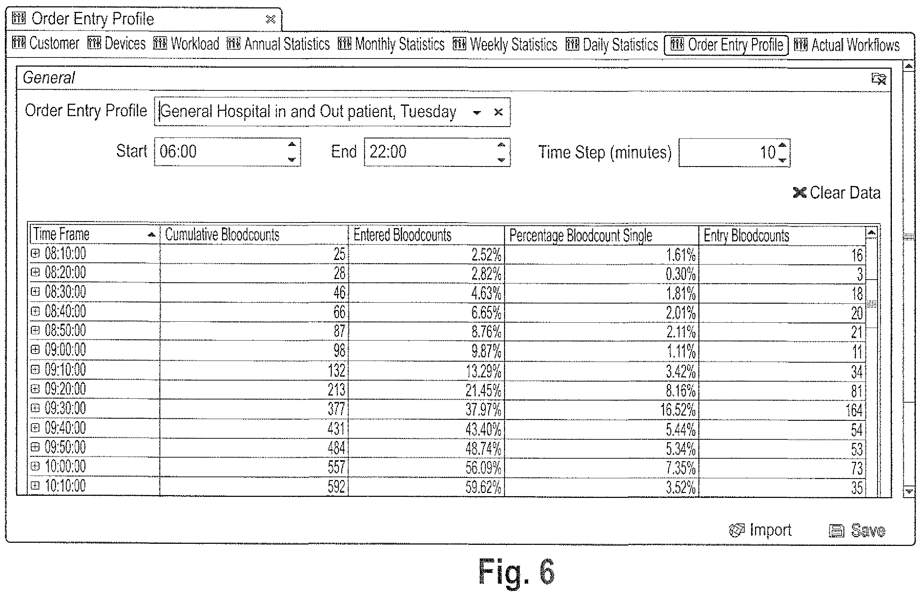

Fig. 6 shows a screenshot with an example of such an order entry profile for a specific day. In particular, the order entry profile may include information as to a start and end time of the profile, as well as a time step for updating the entry profile. Here, the start of the order entry profile is at 6:00 am in the morning and it ends at 22:00 pm in the evening. Moreover, the profile provides every 10 minutes updates of the entry of new bloodcounts. For example, at 8:20, 3 new bloodcount orders were entered, while at 9:30, 164 new bloodcount orders were entered. Based on the numbers of new bloodcount orders, the cumulative number of bloodcounts, the total percentage of the entered bloodcounts for the day (e.g. Tuesday), and/or the single percentage of the entered bloodcounts may be updated according to the selected time step. Here, at 8:20 am there have been 28 new bloodcount orders, which amount to 2.82% of bloodcount orders of that day. Moreover, according to Fig. 6 between 8:10 am and 8:20 am 0.30% of the total bloodcount orders of that day have been newly entered. In contrast, at 9:30 am there have been 164 new bloodcount entries, i.e. 16.52% of the total bloodcount orders of that day have been newly entered between 9:20 am and 9:30 am. Thus, the lab management may design and adapt the overall workflow according to the change of the entry statistics during the specific day.

Moreover, in the embodiment illustrated in Fig. 6, order entry profile averages may be calculated for specific days of a week, for specific days of a year, and further a daily, monthly, and/or annual statistics of the order entry profiles. Thus, the lab management and monitoring personnel may select one of the entry statistics to be used for the simulation procedure S100 for a specific production day.

### D) Measurement statistics

Further, for the simulation procedure S100 and also for the displaying procedure S300, i.e. for the comparison between the simulated progress and the actual progress of the diagnostic test process, also a detailed measurement statistic from the past may be required. This statistics provides information for the simulation procedure S100 as to which measurement are expected to be produced during a day based on the number of samples and as to the required production on the timeline of a day. The simulation module may thus be adapted to produce different measurement statistics, for example an average for a day based on a weekly, monthly and/or yearly statistics. The lab management may thus select a statistics to be used for the simulation procedure S100 of a specific production day.

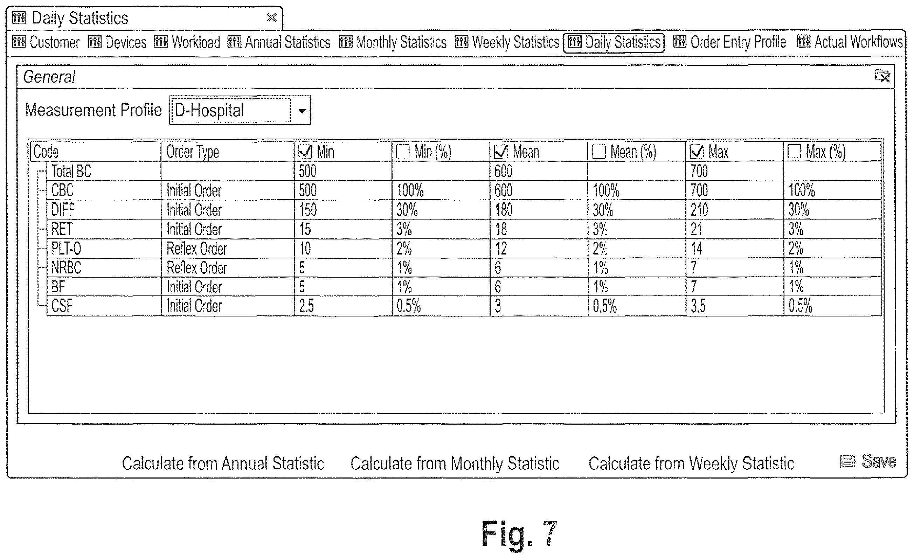

Fig. 7 shows an example of such a daily measurement statistics that may be used for the simulation procedure S100. By using this dialog a user of the lab management can enter a daily statistic manually and/or determine a daily statistics based on a weekly, monthly, or annual statistics. The user can enter concrete figures or a percentage value which refers to the number of "Total BC", which defines sub-processes of the workflow. The "Code" values, e.g. "CBC" and "DIFF", are representing what should be measured, for example with respect to a hematology, coagulation, and/or a urine measurement. In this example the user can enter values for 7 different measurements. This can be different from lab to lab, depending, for example, on the used analyzers and its measurement possibilities. The "order type" value will tell the simulation when to simulate this particular measurement. "Reflex" means that the measurement will not be executed within the first measurement activity (sub-process) for a sample. Instead, an activity (sub-process) marked as "Reflex" will be conditionally executed (and simulated) in a following measurement activity (sub-process) depending on the outcome of a previous measurement activity (sub-process). The user can enter one of three different statistic values for a day: minimum, mean and/or maximum number of measurements per day. For the simulation procedure S100, the user can decide based on the measurement statistics which of the three values should be used. Although Fig. 7 shows that the boxes "Min", "Mean", and "Max" are all checked, only one of the boxes is generally checked for the simulation. For example, the user may expect a heavy workload with many samples to be tested on a day after a long holiday weekend. Therefore, in this case, a maximum number of measurements per day (with the box "Max" checked) should be used for the daily statistics.

Based on the above-described input parameters, the simulation module 100 is able to determine a simulated progress of the diagnostic test process, i.e. the production workflow. Further, the simulation module 100 may provide an estimate as to the production end for those remaining samples, which are not in production yet (i.e., an estimate as to the point in time where the diagnostic test process will be completed for the remaining samples). In addition, the simulation module 100 may be adapted to simulate and thus predict how many samples will be measured during a specified time interval, such as an hour, a day, a week, etc. The simulation procedure S100 may be updated and recalculated automatically based on a preconfigured or selected time step.

Based on the above inputs A to D (as described in above sections "A) Workflow definition", "B) Analyzer configuration", "C) Order entry statistics", "D) Measurement statistics"), the simulation module 100 may perform the simulating procedure S100 such that simulating is based on at least one of data about the number of samples to be actually tested, data about the time at which the samples to be tested are expected to arrive, and data representing the progress of a previous execution of the diagnostic test process, for each or for at least two of the plurality of sub-processes.

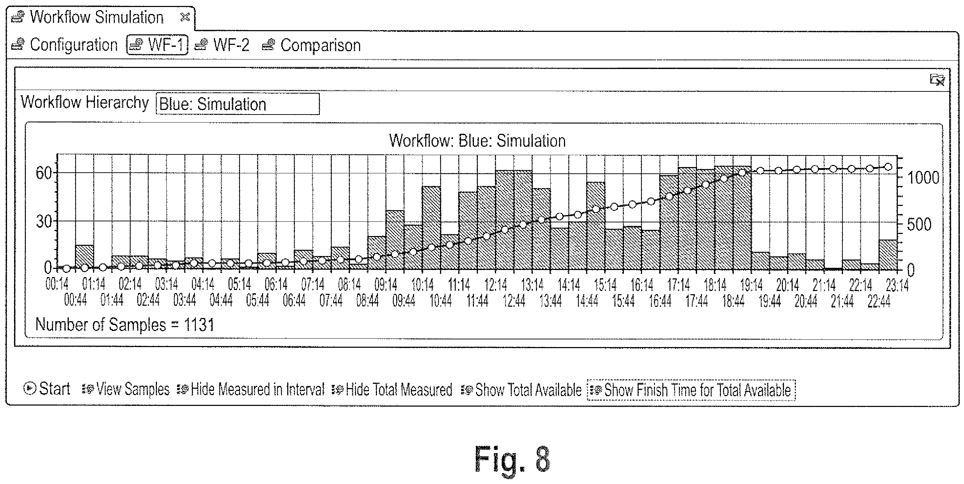

The simulated progress of the entire diagnostic test process and/or a specific sub-process of diagnostic test process may further be presented in a graphical flow on the screen of a display 30 of the processing device 10. Fig. 8 shows an example of a display screen representing the simulated progress for the whole workflow including all sub-processes of the activity groups "pre-analytic", "analytic" and "post-analytic". Here, Fig. 8 shows a graph indicating, with respect to the scale on the right vertical axis, the cumulated number of samples executed until a particular time stamp (as a straight line with circles at the center of each bar, representing a time step, for example from 11:44 to 12:14), and, with respect to the scale on the left vertical axis, the number of samples executed in each time step, represented here as diagonally hatched bars (which may for instance represented in blue in an exemplary user interface).

In particular, Fig. 8 shows the simulated production of processed, e.g. measured and/or analyzed, samples based on the simulated executed number of samples for predefined time steps, here 30 minutes, and its cumulation. Moreover, as Fig. 8 shows the simulated progress of the whole workflow, as for example defined in the configuration shown in Fig. 4, this provides information as to how many samples can be tested on the basis of the defined sub-process configuration. Fig. 8 further represents the whole workflow with all 5 activities from sample unpacking/labelling to result validation, as shown in Fig. 4.

The receiving procedure S200 in Fig. 2 is based on the provision of data representing (i.e., indicative of) the actual progress of the plurality of sub-processes in the diagnostic test process. For example, the receiving procedure S200 may be adapted to acquire information about a number of samples which have been measured, tested, and/or treated at an individual sub-process. Alternatively, or in addition, the receiving procedure S200 may be adapted to acquire an amount of time required to measure, test, and/or treat one or a plurality of samples at an individual sub-process. In particular, an analyzer performing a sub-process may provide information to the processing device 10 as to the completion of a specific activity. Such an information may be based e.g. on providing a time stamp after a specific activity has been finished. The time stamp thus refers to a production time for a specific activity and/or sub-process. For example, the analyzer may transmit a time stamp after performing a particular test on a sample, such that the processing device 10 and the receiving procedure S200 are provided with information as to the amount of time that was needed to perform an activity or a sub-process. Alternatively, the analyzer may provide information after the completion of a predetermined number of samples and/or after the completion of a predetermined time interval (batch reporting). In addition, when a manual sub-process is completed, such as sample unpacking, sample sorting, and/or matching of patient data, a person, for example an employee of the clinical laboratory, may provide information to the processing device 10 to this effect. For example, the employee may be provided with an input device 102 for inputting the amount of samples that were completed in a specific amount of time, or for simply pressing a button once a predetermined number of samples are unpacked and/or sorted, and thus the sub-process is considered to be finished. Here, the input device 102 may be a remote input device at the in situ position of the manual sub-process, which is in communication with the input device 20 of the processing device 10.

Alternatively, or in addition, bar code readers (not shown) may be provided to identify the individual labelled samples throughout the workflow. The bar code readers may be adapted to identify samples at a specific site in the workflow, i.e. before or after an analyzer device, and, based on the identification, the bar code readers may provide the processing apparatus with time information (time stamps) associated with individual samples. Based on the thus received time information, the receiving module may determine the actual progress of the diagnostic test process. In addition, the bar code readers may be distributed such that the manual input of time information at the manual sub-processes (e.g. sample sorting) is not necessary.

Based on the above information received by the receiving procedure S200, a status of the production, i.e. the actual progress of the diagnostic test process, may be determined and presented by the processing device 10, e.g. as a graphical flow for the actual time of the day.

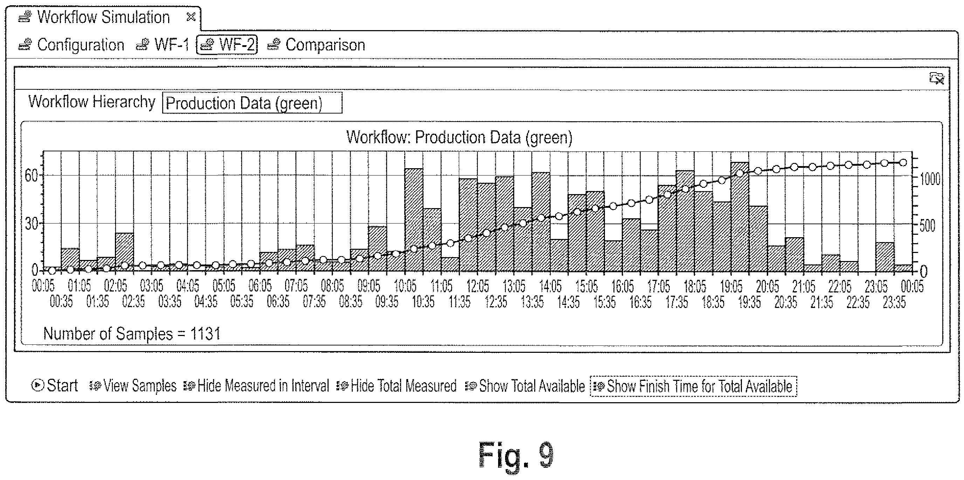

Fig. 9 shows the actual, i.e. concrete production of measured and/or analyzed samples based on the actual executed number of samples for predefined time steps and its cumulation. Here, Fig. 9 shows a graph indicating, with respect to the scale on the right vertical axis, the cumulated number of samples that are actually executed until a particular time stamp (as a straight line with circles at the center of each bar, representing a time step, for example from 11:35 to 12:05), and, with respect to the scale on the left vertical axis, the number of samples actually executed in each time step, represented here as reverse diagonally hatched bars. Similar to Fig. 8, the whole workflow with all activities from sample unpacking/labelling to result validation, as shown in Fig. 4 is shown.

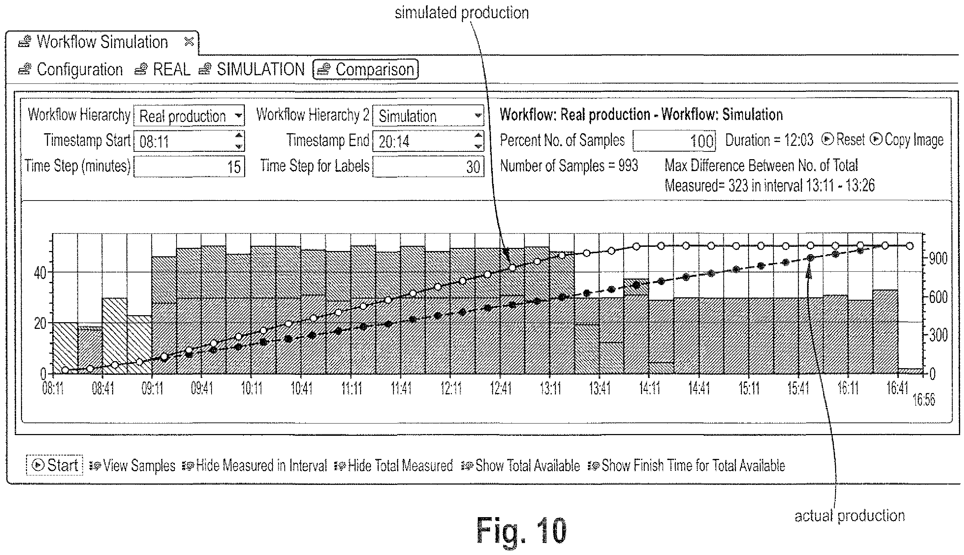

Based on the above results of the simulated progress and the actual progress, the displaying procedure S300 combines the graphical representations shown in Figs. 8 and 9 to provide information as to the difference between the real progress at each point of time of a day and the simulated progress. Fig. 10 shows a screenshot of a possible outcome of a displaying procedure S300 in one embodiment. Similar to the above, the progress of the whole workflow including all activities from sample unpacking/labelling to result validation, as shown in Fig. 4, is provided.

Here, Fig. 10 shows a screenshot that concurrently displays the simulated progress of the diagnostic test process and the received data representing the actual progress of the diagnostic test process for the entire diagnostic test process. Here, Fig. 10 shows a graph indicating, with respect to the scale on the right vertical axis, the cumulated number of samples executed according to the simulation procedure S100 until a particular time stamp (as a straight line with open circles at the center of each bar, representing a time step, for example from 11:41 to 11:56) and the cumulated number of samples that are actually executed until the particular time stamp (as a straight line with closed circles at the center of each bar, representing a time step, for example from 11:41 to 11:56), and further, with respect to the scale on the left vertical axis, the number of samples executed according to the simulation procedure S100 in each time step, represented here as diagonally hatched bars, and the number of samples actually executed in each time step, represented here as reverse diagonally hatched bars. The lightly shaded bars starting at 8:11 and between 8:41 and 9:11 indicated that the number of samples actually executed and the number of samples that should have been executed according to the simulation procedure S100 are identical.

In particular, Fig. 10 shows the cumulated number of finished samples as a function of time based on the simulation procedure S100 and the receiving procedure S200 that monitors the actual production, i.e. the actual progress of the diagnostic test process. Moreover the bars respectively show the number of processed samples for a time step (here 15 minutes) based on both the simulation procedure S100 and the receiving procedure S200. At about 9:41 am, the user, who may be a manager of the clinical laboratory, can already see from Fig. 10 that the real production is slower than the simulation, since a significant difference develops. Moreover, the user is provided with information according to which the simulation predicts the completion of all samples at about 14:11, while the actual production is completed at about 16:56. In addition, according to Fig. 10, the user is provided with information as to a maximal difference between the number of samples that should have been completed according to the simulation procedure S100 and the number of samples that actually have been completed. According to Fig. 10, this maximal difference occurred in the time interval between 13:11 and 13:26 and was related to a delay of 323 samples.

Alternatively, or in addition to the above, the displaying procedure S300 may calculate a difference between the real production and the simulated production and display the difference instead of the individual curves. This may be helpful, if the source of small differences in the sub-processes should be identified.

In addition, the above difference between the simulated production and the actual production may be used to calculate the production simulation for the rest of the day by adapting the simulation calculation on the basis of the above described pre-defined simulation model.

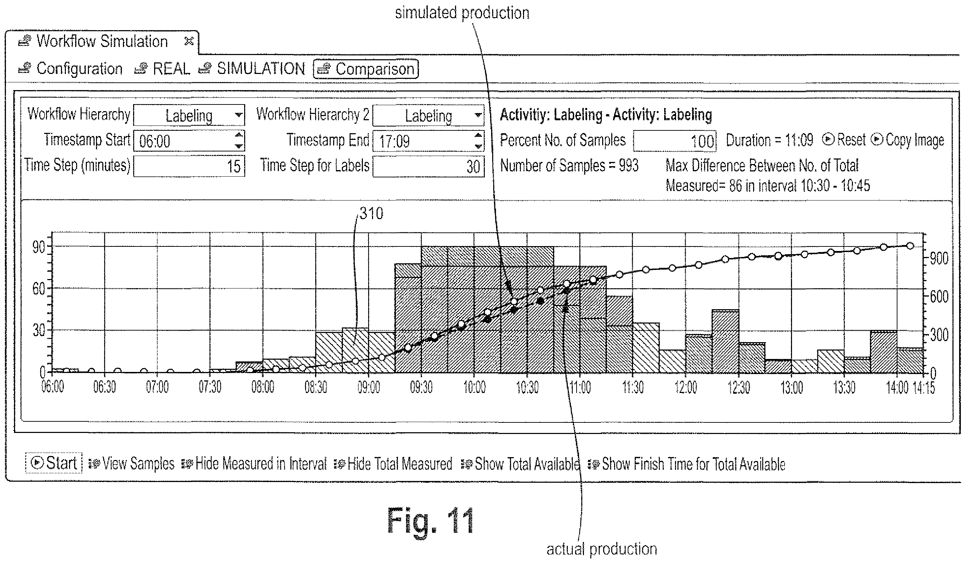

In order to determine the source for such a delay or bottleneck in the actual progress of the diagnostic test process, a user may input instructions into the processing device 10 to display the activity of each sub-process of the workflow separately. Fig. 11 shows an exemplary screenshot of a displaying procedure S300 in one embodiment, with the progress of the workflow for the "labelling" sub-process that is an element of the pre-analytic part of the diagnostic test process. The display of the "labelling" sub-process in the screen shows that the simulation progress and the real progress are very close together. Indeed, in some time intervals, for example between 8:30 and 9:00, the lightly shaded bars 310 in Fig. 11 indicate, that both numbers of samples are identical. Moreover, both the simulation production and the real production end at about 14:15. Based on this detailed information, the "labelling" sub-process thus does not seem to be the bottleneck causing the significant delay shown in Fig. 10.

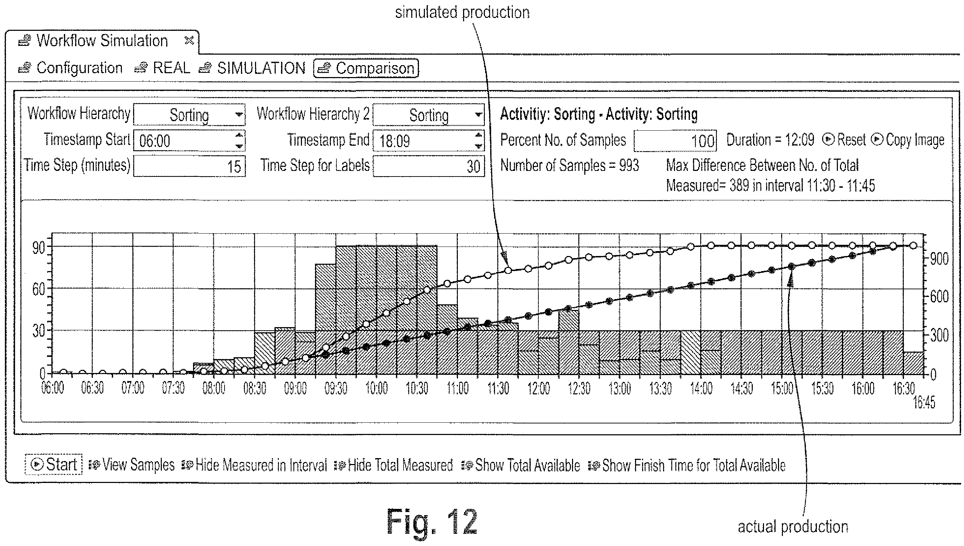

Further, Fig. 12 shows a screen of the displaying procedure S300 in one embodiment with the progress of the workflow for the "sorting" sub-process that is also an element of the pre-analytic part of the diagnostic test process. Based on this information, the user can identify that there is a big difference between the simulation production and the real production starting at about 9:00. Thus, this sub-process can be identified as the bottleneck for the whole defined workflow, as e.g. shown in Fig. 4. The clinical laboratory should therefore increase e.g. the number of employees for this sub-process.

In addition, the displaying module 300 of the processing device 10 may implement an automatic alert procedure that is based on comparing, for one or a plurality of sub-processes of the diagnostic test process, a difference between the simulated progress and the actual progress, and issuing an automatic alert, when the difference the simulated progress and the actual progress exceeds a predetermined threshold. Such a predetermined threshold may be set according to lab production statistics in the past or may be input manually by a user via the input device 20 connected to the processing device 10. Moreover, an individual predetermined threshold may be selected for each sub-process. The above alert may be an audio and/or visual alert, and may be accompanied by displaying a screen for the particular sub-process that caused the alert. Thus, the processing device 10 may automatically identify a bottleneck in the diagnostic test process, such that a user does not have to go through the individual displays of sub-processes in order to identify the cause of a bottleneck.

Moreover, the presentation of the graphical flow of the production status, as shown in Figs. 8 to 12, may be filtered. In particular, depending on the organization of the clinical laboratory, it may thus be possible to see only parts, i.e. specific number of activities or sub-processes of the whole workflow, for example only for a specific workplace or workgroup. For complex organizations and complex workflows, this may help to further optimize the production for identified "bottleneck" activities.

Where the terms "simulating module", "receiving module", and "displaying module", etc. are used herewith, no restriction is made regarding how distributed these elements may be and regarding how gathered elements may be. That is, the constituent elements of a unit may be distributed in different software or hardware components or devices for bringing about the intended function. A plurality of distinct elements may also be gathered for providing the intended functionalities.

Any one of the above-referred modules may be implemented in hardware, software, field-programmable gate array (FPGA), application-specific integrated circuit (ASICs), firmware or the like.

In further embodiments of the invention, any one of the above-mentioned and/or claimed simulating module, receiving module, and displaying module, etc. is replaced by simulating means, receiving means, and displaying means, etc. respectively, by a simulating unit, a receiving unit, and a displaying unit, etc. respectively or by a simulator, receiver, and displayer, etc. respectively, for performing the functions of the simulating module, receiving module, and displaying module, etc.

In further embodiments of the invention, any one of the above-described procedures or steps may be implemented using computer-readable instructions, for example in the form of computer-understandable procedures, methods or the like, in any kind of computer languages, and/or in the form of embedded software on firmware, integrated circuits or the like.

Although the present invention has been described on the basis of detailed examples, the detailed examples only serve to provide the skilled person with a better understanding, and are not intended to limit the scope of the invention. The scope of the invention is much rather defined by the appended claims.

## Claims

1. Method for monitoring a diagnostic test process of samples including at least two sub-processes,
the method including:
a simulating procedure (S100), by a simulation module (100), including simulating, at least based on data representing characteristics of each of the at least two sub-processes, a progress, here referred to as simulated progress, of the diagnostic test process for each of the at least two sub-processes;
a receiving procedure (S200), by a receiving module (200), including receiving time information data representing the actual progress of the diagnostic test process for each of the at least two sub-processes; and
a displaying procedure (S300), by a displaying module (300), including displaying, for each of the at least two sub-processes, information derived from at least the simulated progress of the diagnostic test process and the received time information data representing the actual progress of the diagnostic test process, wherein the derived information is displayed in a manner enabling a comparison of the simulated progress and the actual progress for each of the at least two sub-processes.

2. Method according to claim 1, wherein an input to the simulating procedure (S100) is based on at least one of:
a sequence of execution of the sub-processes in the diagnostic test process,
an analyzer configuration,
order entry statistics, and
measurement statistics.

3. Method of claim 1 or 2, wherein the simulating procedure (S100) is such that simulating is further based on at least one of: data about the number of samples to be actually tested,
data about the time at which the samples to be tested are expected to arrive, and
data representing the progress of a previous execution of the diagnostic test process, for each of the at least two sub-processes.

4. Method according to any one of the preceding claims, wherein each of the sub-processes is performed on a distinct device or distinct segment of a device (40, 42, 44) .

5. Method according to any one of the preceding claims, wherein the at least two sub-processes include at least two of:
labelling sample containers;
sorting sample containers; and
analyzing samples.

6. Method according to any one of the preceding claims, wherein the displaying procedure (S300) further includes: concurrently displaying the simulated progress of the diagnostic test process and the received time information data representing the actual progress of the diagnostic test process for each of the at least two sub-processes.

7. Method according to any one of the preceding claims, further comprising:
comparing, for a sub-process of the diagnostic test process, a difference between the simulated progress and the actual progress; and
issuing an alert, when said difference between the simulated progress and the actual progress exceeds a predetermined threshold.

8. Method according to any one of the preceding claims, wherein the method is for monitoring a diagnostic test process in a clinical laboratory.

9. Device (10) for monitoring a diagnostic test process for samples including at least two sub-processes, said device comprising:
a simulation module (100) configured for simulating, at least based on data representing characteristics of each of the at least two sub-processes, a progress, here referred to as simulated progress, of the diagnostic test process for each of the at least two sub-processes;
a receiving module (200) configured for receiving time information data representing the actual progress of the diagnostic test process for each of the at least two sub-processes, and
a displaying module (300) configured for displaying, for each of the at least two sub-processes, information derived from at least the simulated progress of the diagnostic test process and the received time information data representing the actual progress of the diagnostic test process, wherein the derived information is displayed in a manner enabling a comparison of the simulated progress and the actual progress for each of the at least two sub-processes.

10. Device according to claim 9, wherein the device (10) is connected to at least one of: a hematology analyzer, a urine analyzer, a coagulation analyzer, a sorting apparatus, and a labelling apparatus.

11. Device according to any of claims 9 to 10, wherein the simulation module (100) is further adapted to determine a number of samples that are expected to be processed in at least one sub-process during a period of time.

12. Device according to any of claims 9 to 11, wherein the receiving module (200) is further adapted to receive or acquire a number of samples which have been processed in at least one sub-process during a period of time.

13. Device according to any of claims 9 to 12, further adapted to perform the method according to any one of claims 2 to 8.

14. Computer program including computer-readable instructions configured, when executed on a computer, to cause the computer to carry out the method according to any one of claims 1 to 8.

## Patentansprüche

1. Verfahren zum Überwachen eines Diagnoseprüfprozesses von Proben, der mindestens zwei Teilprozesse beinhaltet, wobei das Verfahren beinhaltet:
eine Simulationsprozedur (S100) durch ein Simulationsmodul (100), die Simulieren, mindestens basierend auf Daten, die Eigenschaften von jedem der mindestens zwei Teilprozesse darstellen, eines Fortschritts, hier als ein simulierter Fortschritt bezeichnet, des Diagnoseprüfprozesses für jeden der mindestens zwei Teilprozesse beinhaltet;
eine Empfangsprozedur (S200) durch ein Empfangsmodul (200), beinhaltend Empfangen von Zeitinformationsdaten, die den tatsächlichen Fortschritt des Diagnoseprüfprozesses für jeden der mindestens zwei Teilprozesse darstellen; und
eine Anzeigeprozedur (S300) durch ein Anzeigemodul (300), beinhaltend Anzeigen, für jeden der mindestens zwei Teilprozesse, von Informationen, die von mindestens dem simulierten Fortschritt des Diagnoseprüfprozesses und den empfangenen Zeitinformationsdaten, die den tatsächlichen Fortschritt des Diagnoseprüfprozesses darstellen, abgeleitet sind, wobei die abgeleiteten Informationen auf eine Weise angezeigt werden, die einen Vergleich des simulierten Fortschritts und des tatsächlichen Fortschritts für jeden der mindestens zwei Teilprozesse ermöglicht.

2. Verfahren nach Anspruch 1, wobei ein Eingang zur Simulationsprozedur (S100) auf mindestens einem basiert von:
einer Ausführungssequenz der Teilprozesse im Diagnoseprüfprozess,
eine Analysatorkonfiguration,
Reihenfolgeneintragsstatistik und
Messstatistik.

3. Verfahren nach Anspruch 1 oder 2, wobei die Simulationsprozedur (S100) so ist, dass Simulieren weiter auf mindestens einem basiert von: Daten über die Zahl von tatsächlich zu prüfenden Proben,
Daten über die Zeit, zu der eine Ankunft der zu testenden Proben erwartet wird, und
Daten, die den Fortschritt einer vorherigen Ausführung des Diagnoseprüfprozesses für jeden der mindestens zwei Teilprozesse darstellen.

4. Verfahren nach einem der vorstehenden Ansprüche, wobei jeder der Teilprozesse auf einer separaten Vorrichtung oder einem separaten Segment einer Vorrichtung (40, 42, 44) durchgeführt wird.

5. Verfahren nach einem der vorstehenden Ansprüche, wobei die mindestens zwei Teilprozesse mindestens zwei beinhalten von:
Kennzeichnen von Probenbehältern;
Sortieren von Probenbehältern; und
Analysieren von Proben.

6. Verfahren nach einem der vorstehenden Ansprüche, wobei die Anzeigeprozedur (S300) weiter beinhaltet:
gleichzeitiges Anzeigen des simulierten Fortschritts des Diagnoseprüfprozesses und der empfangenen Zeitinformationsdaten, die den tatsächlichen Fortschritt des Diagnoseprüfprozesses für jeden der mindestens zwei Teilprozesse darstellen.

7. Verfahren nach einem der vorstehenden Ansprüche, weiter umfassend:
Vergleichen, für einen Teilprozess des Diagnoseprüfprozesses, eines Unterschieds zwischen dem simulierten Fortschritt und dem tatsächlichen Fortschritt; und
Ausgeben eines Alarms, wenn der Unterschied zwischen dem simulierten Fortschritt und dem tatsächlichen Fortschritt eine vorgegebene Schwelle übersteigt.

8. Verfahren nach einem der vorstehenden Ansprüche, wobei das Verfahren zum Überwachen eines Diagnoseprüfprozesses in einem Kliniklabor dient.

9. Vorrichtung (10) zum Überwachen eines Diagnoseprüfprozesses für Proben, die mindestens zwei Teilprozesse beinhalten, wobei die Vorrichtung umfasst:
ein Simulationsmodul (100), das konfiguriert ist, mindestens basierend auf Daten, die Eigenschaften von jedem der mindestens zwei Teilprozesse darstellen, einen Fortschritt, hier als simulierter Fortschritt bezeichnet, des Diagnoseprüfprozesses für jeden der mindestens zwei Teilprozesse zu simulieren;
ein Empfangsmodul (200), das konfiguriert ist, Zeitinformationsdaten, die den tatsächlichen Fortschritt des Diagnoseprüfprozesses für jeden der mindestens zwei Teilprozesse darstellen, zu empfangen, und
ein Anzeigemodul (300), das konfiguriert ist, für jeden der mindestens zwei Teilprozesse Informationen anzuzeigen, die von mindestens dem simulierten Fortschritt des Diagnoseprüfprozesses und den empfangenen Zeitinformationsdaten, die den tatsächlichen Fortschritt des Diagnoseprüfprozesses darstellen, abgeleitet sind, wobei die abgeleiteten Informationen auf eine Weise angezeigt werden, die einen Vergleich des simulierten Fortschritts und des tatsächlichen Fortschritts für jeden der mindestens zwei Teilprozesse ermöglicht.

10. Vorrichtung nach Anspruch 9, wobei die Vorrichtung (10) mit mindestens einem verbunden ist von: einem Hämatologieanalysator, einem Urinanalysator, einem Koagulationsanalysator, einer Sortiereinrichtung und einer Kennzeichnungseinrichtung.

11. Vorrichtung nach einem der Ansprüche 9 bis 10, wobei das Simulationsmodul (100) weiter angepasst ist, eine Zahl von Proben zu ermitteln, die erwartet werden, in mindestens einem Teilprozess während einer Zeitdauer verarbeitet zu werden.

12. Vorrichtung nach einem der Ansprüche 9 bis 11, wobei das Empfangsmodul (200) weiter angepasst ist, eine Zahl von Proben zu empfangen oder zu beschaffen, die in mindestens einem Teilprozess während einer Zeitdauer verarbeitet wurden.

13. Vorrichtung nach einem der Ansprüche 9 bis 12, weiter angepasst, das Verfahren nach einem der Ansprüche 2 bis 8 durchzuführen.

14. Computerprogramm, beinhaltend computerlesbare Anweisungen, die konfiguriert sind, wenn auf einem Computer ausgeführt, den Computer zu veranlassen, das Verfahren nach einem der Ansprüche 1 bis 8 umzusetzen.

## Revendications

1. Procédé pour surveiller un processus de test de diagnostic d'échantillons incluant au moins deux sous-processus,
le procédé incluant :
une procédure de simulation (S100), par un module de simulation (100), incluant une simulation, au moins sur la base de données représentant des caractéristiques de chacun des au moins deux sous-processus, d'une progression, appelée ici une progression simulée, du processus de test de diagnostic pour chacun des au moins deux sous-processus ;
une procédure de réception (S200), par un module de réception (200), incluant une réception de données d'informations de moment représentant la progression réelle du processus de test de diagnostic pour chacun des au moins deux sous-processus ; et
une procédure d'affichage (S300), par un module d'affichage (300), incluant un affichage, pour chacun des au moins deux sous-processus, d'informations dérivées d'au moins la progression simulée du processus de test de diagnostic et des données d'informations de moment reçues représentant la progression réelle du processus de test de diagnostic, dans lequel les informations dérivées sont affichées d'une manière permettant une comparaison de la progression simulée et de la progression réelle pour chacun des au moins deux sous-processus.

2. Procédé selon la revendication 1, dans lequel une entrée dans la procédure de simulation (S100) est basée sur au moins une parmi :
une séquence d'exécution des sous-processus dans le processus de test de diagnostic,
une configuration d'analyseur,
des statistiques d'entrée de commande, et
des statistiques de mesure.

3. Procédé selon la revendication 1 ou 2, dans lequel la procédure de simulation (S100) est telle que la simulation est en outre basée sur au moins certaines parmi : des données concernant le nombre d'échantillons à tester réellement,
des données concernant le moment auquel il est prévu que les échantillons à tester arrivent, et
des données représentant la progression d'une exécution précédente du processus de test de diagnostic, pour chacun des au moins deux sous-processus.

4. Procédé selon l'une quelconque des revendications précédentes, dans lequel chacun des sous-processus est effectué sur un dispositif distinct ou un segment distinct d'un dispositif (40, 42, 44).

5. Procédé selon l'une quelconque des revendications précédentes, dans lequel les au moins deux sous-processus incluent au moins deux parmi :
un étiquetage de récipients d'échantillon ;
un tri de récipients d'échantillon ; et
une analyse d'échantillons.

6. Procédé selon l'une quelconque des revendications précédentes, dans lequel la procédure d'affichage (S300) inclut en outre :
un affichage simultané de la progression simulée du processus de test de diagnostic et des données d'informations de moment reçues représentant la progression réelle du processus de test de diagnostic pour chacun des au moins deux sous-processus.

7. Procédé selon l'une quelconque des revendications précédentes, comprenant en outre :
une comparaison, pour un sous-processus du processus de test de diagnostic, d'une différence entre la progression simulée et la progression réelle ; et
l'émission d'une alerte, lorsque ladite différence entre la progression simulée et la progression actuelle dépasse un seuil prédéterminé.

8. Procédé selon l'une quelconque des revendications précédentes, dans lequel le procédé est pour surveiller un processus de test de diagnostic dans un laboratoire clinique.

9. Dispositif (10) pour surveiller un processus de test de diagnostic pour des échantillons incluant au moins deux sous-processus, ledit dispositif comprenant :
un module de simulation (100) configuré pour simuler, au moins sur la base de données représentant des caractéristiques de chacun des au moins deux sous-processus, une progression, appelée ici une progression simulée, du processus de test de diagnostic pour chacun des au moins deux sous-processus ;
un module de réception (200) configuré pour recevoir des données d'informations de moment représentant la progression réelle du processus de test de diagnostic pour chacun des au moins deux sous-processus, et
un module d'affichage (300) configuré pour afficher, pour chacun des au moins deux sous-processus, des informations dérivées d'au moins la progression simulée du processus de test de diagnostic et des données d'informations de moment reçues représentant la progression réelle du processus de test de diagnostic, dans lequel les informations dérivées sont affichées d'une manière permettant une comparaison de la progression simulée et de la progression réelle pour chacun des au moins deux sous-processus.

10. Dispositif selon la revendication 9, dans lequel le dispositif (10) est raccordé à au moins un parmi : un analyseur d'hématologie, un analyseur d'urine, un analyseur de coagulation, un appareil de tri, et un appareil d'étiquetage.

11. Dispositif selon l'une quelconque des revendications 9 à 10, dans lequel le module de simulation (100) est en outre adapté pour déterminer un nombre d'échantillons qu'il est prévu de traiter dans au moins un sous-processus durant une période de temps.

12. Dispositif selon l'une quelconque des revendications 9 à 11, dans lequel le module de réception (200) est en outre adapté pour recevoir ou obtenir un nombre d'échantillons qui ont été traités dans au moins un sous-processus durant une période de temps.

13. Dispositif selon l'une quelconque des revendications 9 à 12, adapté en outre pour effectuer le procédé selon l'une quelconque des revendications 2 à 8.

14. Programme informatique incluant des instructions lisibles par ordinateur configurées, lorsqu'elles sont exécutées sur un ordinateur, pour amener l'ordinateur à exécuter le procédé selon l'une quelconque des revendications 1 à 8.
